# EUROPEAN PATENT APPLICATION

(11) **EP 3 913 205 A1**
(43) Date of publication of application: **24.11.2021**
(21) Application number: 20175228.4
(22) Date of filing: 18.05.2020
(51) Int. Cl.: F02D 41/02, F02D 41/08, F02D 41/12

(54) **METHOD FOR ENGINE BRAKING AND A POWERTRAIN**

(71) Applicant: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: EKELUND, Johan, 417 16 GÖTEBORG (SE); FESSEHATSION, Henok, 424 49 GÖTEBORG (SE)
(74) Representative: Zacco Sweden AB

(57) **Abstract**

The disclosure relates to a powertrain (1) and a method for engine braking of a vehicle (18). The method comprises the steps:
- detecting a state indicative of a desired engine braking,
- controlling an engine speed to a set engine speed target value by controlling a powertrain component (3) in response to the detected state of a desired engine braking. The powertrain (1) is configured for performing the method.

## Description

### TECHNICAL FIELD

The disclosure relates to a method for engine braking of a vehicle and a powertrain arranged for engine braking.

### BACKGROUND ART

Engine braking is one way of slowing down a vehicle without relying on the vehicle's friction brakes that convert the vehicle's kinetic energy to heat. Engine braking is for instance used in eco driving, where it is used to reduce the speed of the vehicle while at the same time allowing the driver to accelerate if needed. One such example is using engine braking when approaching a red light, where the driver can accelerate in the same gear if the light turns green before the vehicle has come to a complete stop.

However, engine braking generates an excessive amount of deceleration due to unnecessarily high engine speed in most cases, for instance if a driver downshifts during engine braking, an increased level of deceleration is felt as the engine speed increases. This increased deceleration results in wasted energy within the engine, and thereby wasted fuel and increased wear of the engine.

US 2013/0138313 A1 discloses a method for coasting control where after a period of disengaging the clutch during coasting, engine braking is applied when the clutch is engaged. This leads to a great increase in engine speed, thereby wasting kinetic energy and leading to waste of fuel and increased engine wear.

### SUMMARY

An objective of the disclosure is to provide a method for engine braking of a vehicle and a powertrain, which creates conditions for an energy and/or fuel-efficient engine braking. The objective is achieved by the method of claim 1 and the powertrain of claim 7. Dependent claims provide advantageous embodiments.

The disclosure relates to a method for engine braking of a vehicle, wherein the method comprises the steps:
- detecting a state indicative of a desired engine braking,
- controlling an engine speed to a set engine speed target value by controlling a powertrain component in response to the detected state of a desired engine braking.

The method allows the engine to be controlled to a set engine speed during engine braking. This leads to that the engine speed can be set to a significantly lower engine speed during the entire engine braking than what is done today. This reduced engine speed can be controlled also when shifting gears, thereby reducing the increase in engine speed experienced today. This allows for a smoother ride independent on the traffic situation and vehicle speed.

The method may also comprise the step:
- controlling the engine speed to a set engine speed target value within 30 - 70 RPM higher than the engine idle speed, specifically to within 40-60 RPM higher than the engine idle speed, more specifically to within 45 - 55 RPM higher than the engine idle speed.

The method allows the engine to be controlled to an engine speed where the fuel consumption is reduced when compared to normal engine braking due to lower compression and friction losses in combustion engine, whilst still not requiring any fuel since the vehicle inertia is used to spin the engine. By setting the engine speed to an engine speed target value slightly above the engine idle speed, the vehicle can coast a longer distance using the same or less amount of fuel as today's vehicle. The set engine speed target value also ensures that the engine does not risk stalling.

The powertrain component may comprise a dual-clutch transmission, wherein the method comprises the step:
- controlling the engine speed by controlling a transmission slip amount of an active clutch.

In case the vehicle is equipped with a dual-clutch transmission, the engine speed is controlled by controlling a transmission slip amount of the active clutch. If a gearshift is desired, the inactive clutch will be prepared to continue the control of the transmission slip to maintain the set engine speed target value.

The powertrain component may comprise a torque converter, wherein the method comprises the step:
- controlling the engine speed by controlling a transmission torque ratio of the torque converter by controlling a torque converter flow valve.

In case the vehicle is equipped with a transmission comprising a torque converter, the engine speed is controlled by controlling a transmission torque ratio of the torque converter by controlling a torque converter flow valve.

Detecting a state indicative of a desired engine braking may comprise the steps:
- detecting a closed state of a throttle valve upon a reduction of an accelerator pedal travel to zero,
- detecting a cut in fuel injector volume requests from the control system.

In order to fully utilize the fuel savings, the method is used during fuel-cut engine braking. The method is engaged when the throttle valve is closed and a cut in fuel injector volume requests.

The method may comprise the steps:
- disabling controlling the engine speed upon detection of one or more of:
- a shift lever position sensor signal indicating a change in shift lever position signal value,
- a vehicle speed sensor signal being lower than a threshold vehicle speed signal,
- a brake pedal travel sensor signal indicating application of the brake pedal, and
- an accelerator pedal travel sensor signal indicating application of the accelerator pedal.

The method operates under certain conditions and is disabled if one or more conditions are met. A shift lever position sensor monitors the lever position and any shift lever movements. Normally, the shift lever is in the "D" position during driving. As one example condition, if the shift lever is moved to any other position than D, the method would be disabled. It has been shown that the method is inefficient or even inapplicable below speeds of approximately 15 - 25 km/h in most drivetrains. As one example condition, if the speed of the vehicle drops below this threshold vehicle speed, the method would be disabled. Also operating the brake pedal or the accelerator pedal will cause the method to be disabled. The method can be arranged to be disabled upon any one of the conditions are met, whichever is triggered first. The method can also be arranged to be disabled when two or more conditions are met.

The disclosure also relates to a powertrain. The powertrain is arranged to be controlled by a control system. The control system is configured for detecting a state indicative of a desired engine braking and for controlling an engine speed to a set engine speed target value by controlling a powertrain component in response to the detected state of a desired engine braking.

A powertrain arranged to be controlled by a control system may utilize the method as described above, thereby enabling the advantages described above. Any vehicle comprising a transmission having an electronically controllable powertrain component that can be used to control the engine speed can use the method.

The control system may further be configured for controlling the engine speed to a set engine speed target value within 30 - 70 RPM higher than the engine idle speed, specifically to within 40 - 60 RPM higher than the engine idle speed, more specifically to within 45 - 55 RPM higher than the engine idle speed.

The powertrain component may be a dual clutch transmission configured for controlling the engine speed by controlling the transmission slip amount of the active clutch.

The powertrain component may comprise a torque converter configured for controlling the engine speed by controlling a transmission torque ratio of the torque converter by means of controlling a torque converter flow valve.

The control system may further be configured for disabling controlling of the engine speed based upon detection of one or more of:
- a shift lever position sensor signal indicating a change in shift lever position signal value,
- a vehicle speed sensor signal being lower than a threshold vehicle speed signal,
- a brake pedal travel sensor signal indicating application of the brake pedal, and
- an accelerator pedal travel sensor signal indicating application of the accelerator pedal.

The disclosure also relates to a vehicle comprising a powertrain according to the above description.

### BRIEF DESCRIPTION OF THE DRAWINGS

Figure 1 schematically shows a flowchart of the method according to the disclosure,
Figure 2 schematically shows a powertrain comprising a powertrain component according to a first example embodiment of the disclosure,
Figure 3 schematically shows a powertrain comprising a dual-clutch transmission according to a second example embodiment of the disclosure,
Figure 4 schematically shows a powertrain comprising a torque converter according to a third example embodiment of the disclosure,
Figure 5 schematically shows a vehicle comprising a powertrain according to the disclosure.

### DETAILED DESCRIPTION

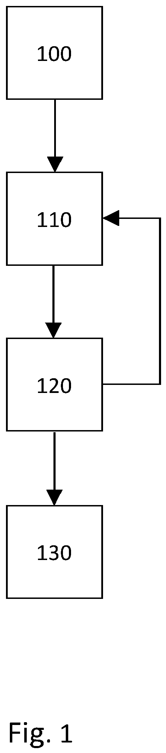

Figure 1 schematically shows a flowchart of the method according to the disclosure.

In method step 100, the control system detects a state indicative of a desired engine braking. In method step 110, the control system controls an engine speed to a set engine speed target value by controlling a powertrain component in response to the detected state of a desired engine braking. This is the method in its most general form.

In method step 110, the control system more specifically controls the engine speed to a set engine speed target value within 30 - 70 RPM higher than the engine idle speed, specifically to within 40 - 60 RPM higher than the engine idle speed, more specifically to within 45 - 55 RPM higher than the engine idle speed. The engine idle speed is continuously obtained from an engine control unit (ECU) and depends on the type of engine in the vehicle and of the number of accessories powered, such as air conditioning. The idle speed thus continuously varies and the engine speed target value continuously varies accordingly. The powertrain component is thus continuously controlled with respect to the set engine target speed.

In method step 100, the detecting of a state indicative of a desired engine braking more specifically comprises detecting a closed state of a throttle valve upon a reduction of an accelerator pedal travel to zero and detecting a cut in fuel injector volume requests.

In method step 120, the control system monitors a number of sensor signals to determine if the method should be disabled. Absent such sensor signals, the method continues to run according to step 110. Disabling controlling the engine speed comprises detection of one or more of a shift lever position sensor signal indicating a change in shift lever position signal value, a vehicle speed sensor signal being lower than a threshold vehicle speed signal, a brake pedal travel sensor signal indicating application of a brake pedal, and an accelerator pedal travel sensor signal indicating application of an accelerator pedal.

In method step 130, the method is disabled and can be restarted again whenever the control system detects a state indicative of a desired engine braking according to step 100.

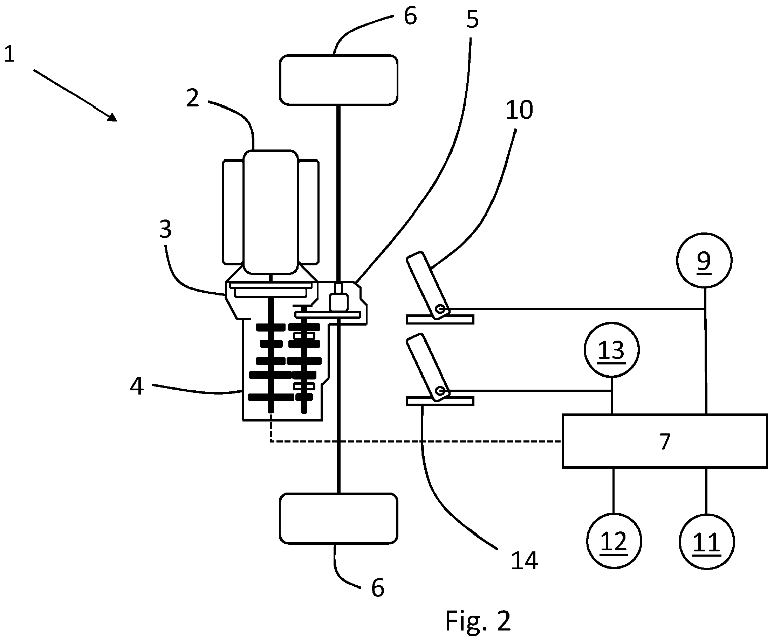

Figure 2 schematically shows a powertrain 1 according to a first example embodiment of the disclosure. The powertrain 1 comprises an engine 2, a powertrain component 3, a transmission 4, a differential 5 and two front wheels 6. The engine 2 provides power to the front wheels 6 via the differential 5 connected to the transmission 4. The transmission 4 is connected to the engine 2 via the powertrain component 3, where the powertrain component 3 transfers the rotational motion of the engine 2 to the wheels 6. In the examples shown in the figures, the vehicle is a front wheel drive vehicle. It lies within the scope of the disclosure that the method and powertrain are appropriate also for e.g. a rear wheel drive vehicle or an all-wheel drive vehicle.

The powertrain component 3 is arranged to be controlled by a control system 7, e.g. an electronic control unit connected to the powertrain 1 and thereby arranged to control the powertrain component 3. The electronic control unit is in the example illustrated as one unit, it may in reality be a number of different electronic control units working together to perform the control. In the figures, it is schematically shown that the control system 7 is in signal connection with the transmission 4 and thereby the powertrain component 3 by a dashed line. Control system 7 is also in signal connection with the engine 2 in order to obtain information and to control the engine 2.

The control system 7 is configured for detecting a state indicative of a desired engine braking and for controlling an engine speed to a set engine speed target value by controlling the powertrain component 3 in response to the detected state of a desired engine braking.

The control system 7 is arranged to set the engine speed target value to within 30 - 70 RPM higher than the engine idle speed, specifically to within 40 - 60 RPM higher than the engine idle speed, more specifically to within 45 - 55 RPM higher than the engine idle speed. The engine idle speed is obtained from an engine control unit (ECU) and depends on the type of engine in the vehicle and of the number of accessories powered by the engine 2, such as e.g. air conditioning, at any given time. The idle speed thus varies and the engine speed target value varies accordingly.

The state indicative of a desired engine braking comprises detection of a closed state of a throttle valve 8 upon a reduction of an accelerator pedal travel to zero as measured by an accelerator pedal travel sensor 9 connected to the accelerator pedal 10 and the control system 7. The state indicative of a desired engine braking also comprises detecting a cut in fuel injector volume requests from the control system 7.

When a state indicative of a desired engine braking is detected, the control system 7 controls the torque transfer of the powertrain component 3 from the transmission 4 to the engine 2 such that the engine 2 can operate at the engine speed target value. This is done by that a rotational speed of a transmission shaft connected to the powertrain component 3 is reduced to the engine speed target value, allowing the engine 2 to run at a lower engine speed than what would otherwise be possible using a fixed input shaft to output shaft speed ratio.

Controlling the speed of the transmission shaft during gearshift is known as such. The powertrain 1 according to the disclosure implements this control to reduce the transmission shaft speed during engine braking in addition to during gearshift.

Should the engine speed approach stall speed such that a gearshift down is required to keep the engine 2 running, the powertrain 1 according to the disclosure allows for execution of a gearshift down where the engine speed is maintained at the engine speed target value during and after the gearshift as the speed of the transmission shaft is continuously controlled. Should it be required to reduce the transmission shaft speed quickly, a gearshift up is also possible.

Keeping the engine 2 running at an engine speed close to its idle speed, without the need to inject and combust fuel, i.e. under fuel-cut condition, results in a greatly reduced deceleration during engine braking without losing the economic benefits of cutting fuel to the engine 2. Thus, the vehicle will lose less momentum during the desired engine braking state and the vehicle is able to travel significantly farther using the same amount of fuel. This will lead to that the vehicle is able to cover the same distance using less fuel than during currently used engine braking. Additional benefits of using low engine speed engine braking are reduced engine wear and reduced noise, vibration and harshness (NVH).

Regarding the reduced engine wear, as the engine speed during engine braking would be greatly reduced the wear on mechanical parts such as valves, timing chain/belt along with cooling and lubrication (oil and coolant) will inherently be reduced. This will prolong the service intervals, leading to lowered running costs.

Regarding NVH, as the engine speed is reduced, the sound from the engine 2 is also reduced, along with vibrations. This results in improved interior comfort, not only because the engine 2 is making less noise, but also because the engine speed will be targeted at a constant value close to idle speed, thereby keeping the perceived noise in the vehicle interior at a minimum.

Engine braking is disabled if some conditions are met. The control system 7 is further configured for disabling controlling of the engine speed based upon detection of one or more of:
- a shift lever position sensor signal from a shift lever position sensor 11 indicating a change in shift lever position signal value,
- a vehicle speed sensor signal from a vehicle speed sensor 12 being lower than a threshold vehicle speed signal,
- a brake pedal travel sensor signal from a brake pedal travel sensor 13 indicating application of the brake pedal 14, and
- an accelerator pedal travel sensor signal from an accelerator pedal travel sensor 9 indicating application of the accelerator pedal 10.

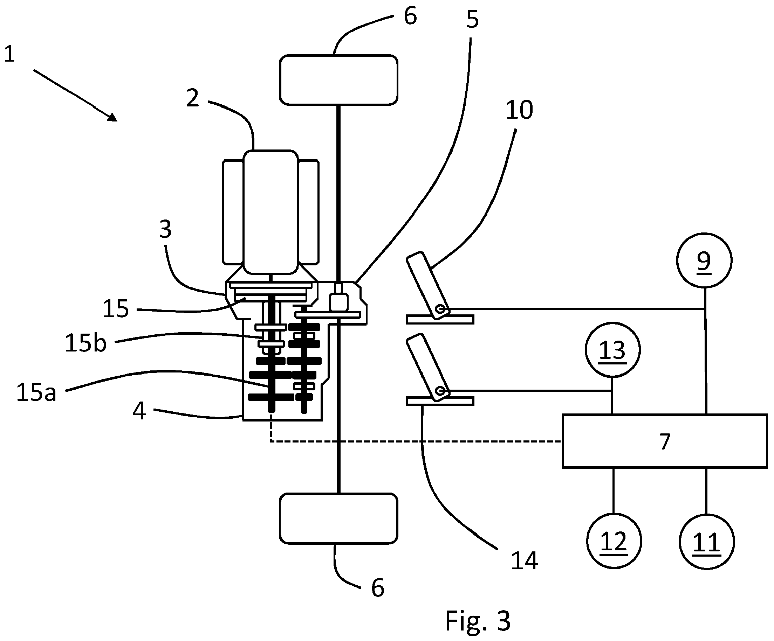

Figure 3 schematically shows a powertrain 1 comprising a powertrain component 3 according to a second example embodiment of the disclosure. In the second example embodiment, the powertrain 1 comprises a dual-clutch transmission comprising a first primary shaft 15a and second primary shaft 15b. The powertrain component 3 in this example embodiment is the active clutch 15 of the dual-clutch transmission, in this example the clutch of the second primary shaft 15b.

When a state indicative of a desired engine braking is detected, the control system 7 controls the transmission slip amount of the active clutch 15 of the dual-clutch transmission to reduce the transmission shaft speed such that the engine 2 can operate at the engine speed target value.

When the method is applied, the active shaft's clutch applies a control strategy where the control error = engine speed target value (in RPM) - engine speed (in RPM). This error is input to a proportional-integral-derivative (PID) controller or a proportional-integral (PI) controller where the output from the controller is the final clutch torque request adapted to retain the set engine speed target value. This embodiment thus relies on an existing pressure-to-torque actuation in existing transmission components to perform the method according to the disclosure.

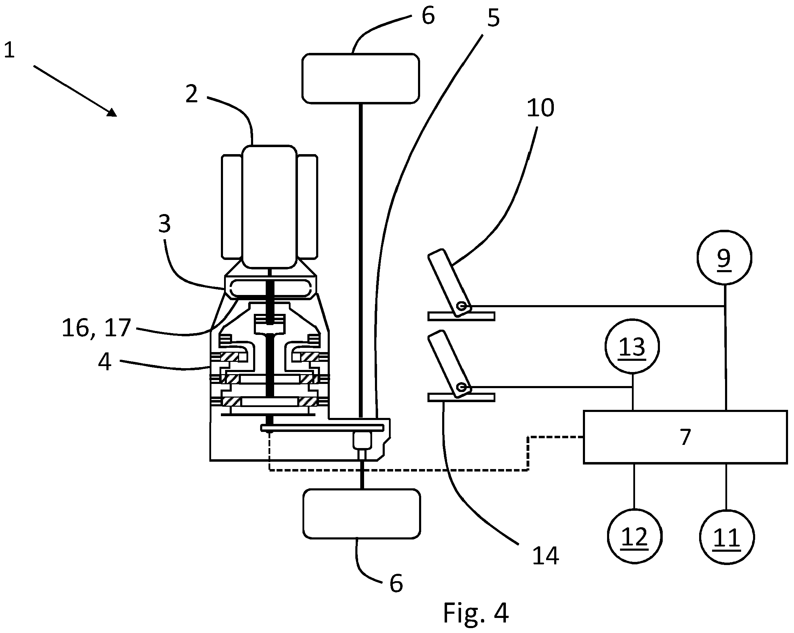

Figure 4 schematically shows a powertrain 1 comprising a powertrain component 3 according to a third example embodiment of the disclosure. In figure 4, the powertrain 1 comprises a torque converter 16.

In a transmission 4 comprising a torque converter 16, the control strategy would be the same as the one described for the dual-clutch transmission, with the only difference that the controlled powertrain component 3 used to reduce the transmission shaft speed is a torque converter flow valve 17 of the torque converter 16 instead of the active clutch 15. This embodiment thus relies on an existing oil flow rate-to-torque actuation in existing transmission components to perform the method according to the disclosure.

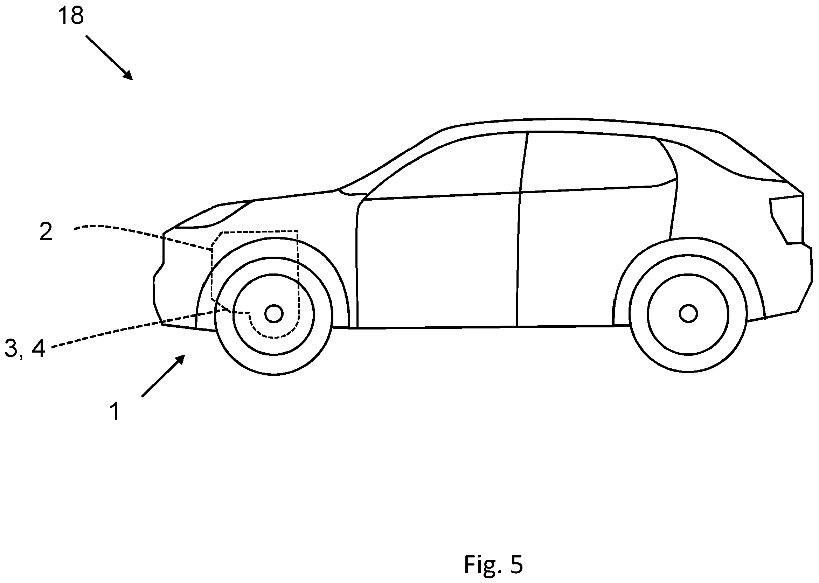

Figure 5 schematically shows a vehicle 18 comprising a powertrain 1 according to the disclosure. In the figure, the engine 2, the powertrain component 3, and transmission are schematically indicated. As mentioned above, although the method and powertrain 1 of the disclosure are described for a front-wheel drive vehicle, it lies within the scope of the disclosure to adapt them for e.g. a rear wheel drive vehicle or an all-wheel drive vehicle.

Although the disclosure has been illustrated and described in detail in the drawings and foregoing description, such illustration and description are to be considered illustrative or exemplary and the disclosure is not limited to the disclosed example embodiments.

### References:

- 1.: Powertrain
- 2.: Engine
- 3.: Powertrain component
- 4.: Transmission
- 5.: Differential
- 6.: Wheel
- 7.: Control system
- 8.: Throttle valve
- 9.: Accelerator pedal travel sensor
- 10.: Accelerator pedal
- 11.: Shift lever position sensor
- 12.: Vehicle speed sensor
- 13.: Brake pedal travel sensor
- 14.: Brake pedal
- 15.: Active clutch
a. First primary shaft
b. Second primary shaft
- 16.: Torque converter
- 17.: Torque converter flow valve
- 18.: Vehicle

## Claims

1. Method for engine braking of a vehicle (18), wherein the method comprises the steps:
- detecting a state indicative of a desired engine braking,
- controlling an engine speed to a set engine speed target value by controlling a powertrain component (3) in response to the detected state of a desired engine braking.

2. Method according to claim 1, wherein the method comprises the step:
- controlling the engine speed to a set engine speed target value within 30 - 70 RPM higher than the engine idle speed, specifically to within 40 - 60 RPM higher than the engine idle speed, more specifically to within 45 - 55 RPM higher than the engine idle speed.

3. Method according to claim 1 or 2, wherein the powertrain component (3) is an active clutch (15) of a dual-clutch transmission, wherein the method comprises the step:
- controlling the engine speed by controlling a transmission slip amount of the active clutch (15).

4. Method according to claim 1 or 2, wherein the powertrain component (3) comprises a torque converter (16), wherein the method comprises the step:
- controlling the engine speed by controlling a transmission torque ratio of the torque converter (16) by controlling a torque converter flow valve (17).

5. Method according to any one of the preceding claims, wherein detecting a state indicative of a desired engine braking comprises the steps:
- detecting a closed state of a throttle valve (8) upon a reduction of an accelerator pedal travel to zero,
- detecting a cut in fuel injector volume requests from the control system (7).

6. Method according to any one of the preceding claims, wherein the method comprises the steps:
- disabling controlling the engine speed upon detection of one or more of:
- a shift lever position sensor signal indicating a change in shift lever position signal value,
- a vehicle speed sensor signal being lower than a threshold vehicle speed signal,
- a brake pedal travel sensor signal indicating application of the brake pedal (14), and
- an accelerator pedal travel sensor signal indicating application of the accelerator pedal (10).

7. Powertrain (1) arranged to be controlled by a control system (7), **characterized in that** the control system (7) is configured for detecting a state indicative of a desired engine braking and for controlling an engine speed to a set engine speed target value by controlling a powertrain component (3) in response to the detected state of a desired engine braking.

8. Powertrain (1) according to claim 7, wherein the control system (7) is further configured for controlling the engine speed to a set engine speed target value within 30 - 70 RPM higher than the engine idle speed, specifically to within 40 - 60 RPM higher than the engine idle speed, more specifically to within 45 - 55 RPM higher than the engine idle speed.

9. Powertrain (1) according to claim 7 or 8, wherein the powertrain component (3) is an active clutch (15) of a dual-clutch transmission configured for controlling the engine speed by controlling the transmission slip amount of the active clutch (15).

10. Powertrain (1) according to claim 7 or 8, wherein the powertrain component (3) comprises a torque converter (16) configured for controlling the engine speed by controlling a transmission torque ratio of the torque converter (16) by means of controlling a torque converter flow valve (17).

11. Powertrain (1) according to any one of claims 7-10, wherein the control system (7) is further configured for disabling controlling of the engine speed based upon detection of one or more of:
- a shift lever position sensor signal indicating a change in shift lever position signal value,
- a vehicle speed sensor signal being lower than a threshold vehicle speed signal,
- a brake pedal travel sensor signal indicating application of the brake pedal (14), and
- an accelerator pedal travel sensor signal indicating application of the accelerator pedal (10).

12. Vehicle (18) comprising a powertrain (1) according to any one of claims 7-11.
